# EUROPEAN PATENT SPECIFICATION

(11) **EP 3 208 671 B1**
(45) Date of publication and mention of the grant of the patent: **24.10.2018**
(21) Application number: 16156264.0
(22) Date of filing: 18.02.2016
(51) Int. Cl.: G05B 19/042

(54) **INTERFACE FOR COMMUNICATION BETWEEN AN INDUSTRIAL AUTOMATION APPLICATION AND AN INDUSTRIAL FIELDBUS**
SCHNITTSTELLE ZUR KOMMUNIKATION ZWISCHEN EINER INDUSTRIELLEN AUTOMATISIERUNGSANWENDUNG UND EINEM INDUSTRIELLEN FELDBUS
INTERFACE DE COMMUNICATION ENTRE UNE APPLICATION D'AUTOMATISATION INDUSTRIELLE ET UN BUS DE TERRAIN INDUSTRIEL

(43) Date of publication of application: 23.08.2017
(73) Proprietor: PA Power Automation Aktiengesellschaft, 74385 Pleidelsheim (DE)
(72) Inventor: Hilpert, Marc, 74385 Pleidelsheim (DE); Knierim, Werner, 71735 Eberdingen (DE)
(74) Representative: DREISS Patentanwälte PartG mbB

(56) References cited:
- EP-A1- 2 765 465
- US-A1- 2011 283 027

## Description

### Field of the invention

The application relates to an interface and a corresponding method for communication between an industrial automation application and an industrial fieldbus.

### Background of the invention

An industrial automation system comprises at least one control device and one or more peripheral devices. Peripheral devices are for example sensors or actuators. The control device and the peripheral device are connectable via an industrial fieldbus.

Industrial fieldbus in this description relates to a family of industrial computer network protocols. The protocols are standardized for example as IEC 61158, IEC 61784-2 or ISO 15745-4. For example the EtherCAT protocol may be used in an implementation of the industrial fieldbus.

This means that distinct peripheral devices are connectable to the control device via compatible industrial fieldbus interfaces.

An operating system manages the computer hardware of the control device and an industrial automation application.

Messages are transmitted between a peripheral device and the industrial automation application via the industrial fieldbus.

The industrial automation application is configured to send and receive the respective messages via the industrial fieldbus. While peripheral devices and control devices are connectable via the same industrial fieldbus protocol, distinct peripheral devices require distinct functionality.

For collaboration the industrial automation application has to be configured distinctly for distinct peripheral devices. This means that upon exchanging a peripheral device of one configuration with a peripheral device of another configuration, the industrial automation application has to be re-configured as well.

US 2011/0283027 A1 discloses an automation appliance and method for accelerated processing of selected process data.

EP 2 765 465 A1 discloses a Fieldbus communication module and method.

### Summary of the invention

In view of this, an improved interface and a corresponding method for communication between an industrial automation application and an industrial fieldbus according to the independent claims are provided.

A Computerized Numerical Control device comprising such interface is provided as well.

This way the collaboration of an industrial automation application and any peripheral device is reliably implemented.

These and other objects, embodiments, advantages and/or distinctions of the present invention will become readily apparent upon further review of the following specification, associated drawings and appended claims.

### Brief description of the drawings

Fig. 1 depicts schematically an industrial automation system,
Fig. 2 depicts schematically a method for communication between an industrial automation application and an industrial fieldbus,
Fig. 3 depicts schematically a method for preparing input data,
Fig. 4 depicts schematically a method for preparing output data,
Fig. 5 depicts schematically a method for calibrating a peripheral device,
Fig. 6 depicts schematically a process for assignment.

### Detailed description of the drawing

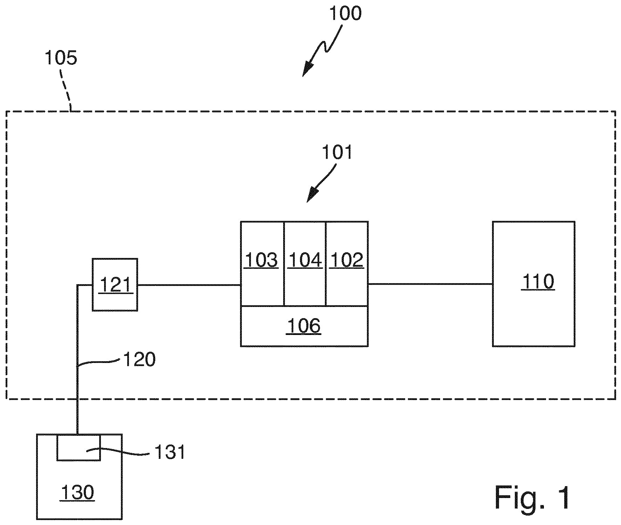

Fig. 1 depicts schematically an industrial automation system 100 including an interface 101 for communication between an industrial automation application 110 and an industrial fieldbus 120.

A control device 105 comprises the interface 101 and the industrial automation application 110.

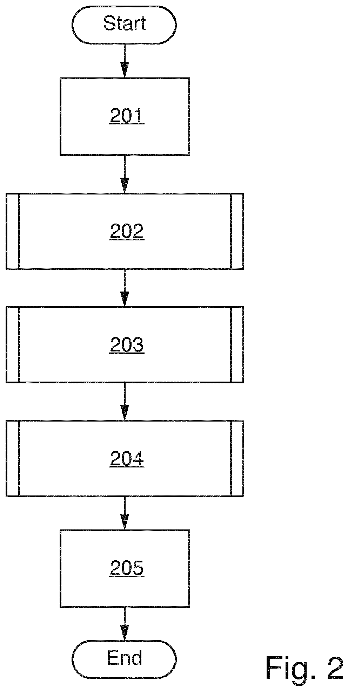

An operating system manages the control device 105. Preferably the operating system manages the interface 101 and the industrial automation application 110. A corresponding method is described below referencing figure 2.

A fieldbus controller 121 is operable to communicate with a peripheral device 130. The fieldbus controller 121 is implemented in an example as industrial Ethernet Master or EtherCAT Master. The industrial fieldbus controller 121 is preferably configured as master device to communicate with a corresponding peripheral slave device 131 of the peripheral device 130 via the industrial fieldbus 120.

Preferably the industrial automation application 110 is a Computerized Numerical Control application. In this case the control device 105 is a Computerized Numerical Control system.

The interface 101 comprises a first interface 102 to the industrial automation application 110. The interface 101 comprises a second interface 103 to the fieldbus controller 121.

Data links between the elements connect the corresponding interfaces.

The interface 101 comprises a functional element 104 between the first interface 103 and the second interface 102.

The functional element 104 comprises an implementation of a peripheral device specific, industrial automation function.

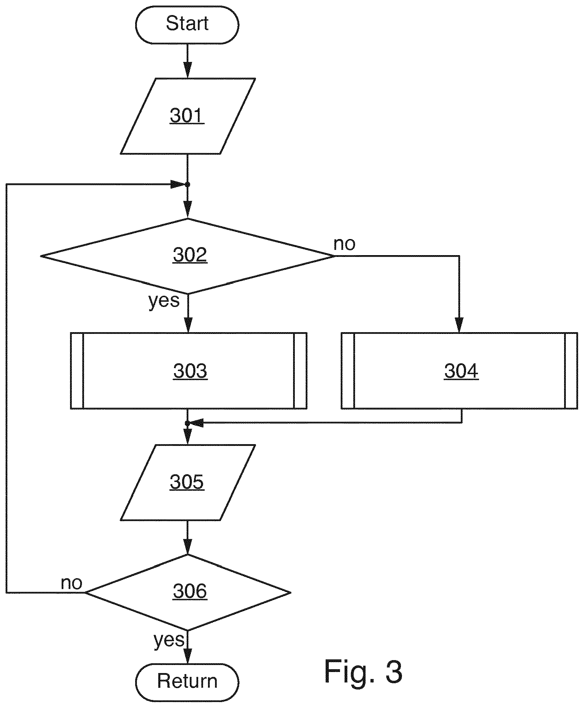

The peripheral device specific, industrial automation function is described below referencing figure 3.

The industrial automation application 110 is configured to communicate via the fieldbus 120, preferably cyclically.

The interface 101, the industrial fieldbus controller 121 and/or the industrial automation application 110 is preferably configured for real time processing with a duty cycle between any of 10µs, 50µs, 64.5µs, 125µs and 250µs and any of 4ms, 10ms and 20ms. In the example a duty cycle between 0.5ms - 2ms is used.

A method for communication between the industrial automation application 110 and the industrial fieldbus 120 is described below, referencing figure 2. The method is preferably repeated cyclically within one of the above described duty cycles.

In one cycle, after the start, a step 201 is executed.

In step 201, an actual input data is read from the field bus 120. To this end for example the industrial fieldbus controller 121, i.e. the industrial Ethernet Master or the industrial EtherCAT Master, receives data from the fieldbus 120 and sends the data to the second interface 103. In this process the corresponding field bus protocol is used.

In an example of a Computerized Numerical Control a message received via the industrial fieldbus 120 including as payload, corresponding data is read. Preferably all current data, in particular all data received since the last cycle, is read.

This way an automation technology input value is received by the second interface 103 from the fieldbus controller 121 as payload of the message according to the applicable industrial fieldbus protocol.

This means that the second interface 103 receives data according to the corresponding field bus protocol.

Afterwards a step 202 is executed.

In step 202 the functional element 104 prepares input data for the industrial automation application 110. The input data for the industrial automation application 110 in this context is an automation technology output value. An exemplary process for this preparation is explained below referencing figure 3.

Preparing in this context means that the peripheral device specific, industrial automation function determines the automation technology output value from the automation technology input value. The peripheral device specific, industrial automation function comprises at least one corresponding predetermined instruction.

The input data for the industrial automation application 110 is provided to the industrial automation application 110 via the first interface 102.

Providing in this context means e.g. that the input data is stored at predetermined storage location in the control device 105 for access by the industrial automation application 110. Afterwards a step 203 is executed.

In step 203 the industrial automation application calculates output data based on the input data received from the first interface 102. In the example, a Computerized Numerical Control application determines for example a set point for a peripheral device 130 as output data. The output data may represent a request for sensor data likewise.

Afterwards a step 204 is executed.

In step 204 output data for the fieldbus 120 is prepared.

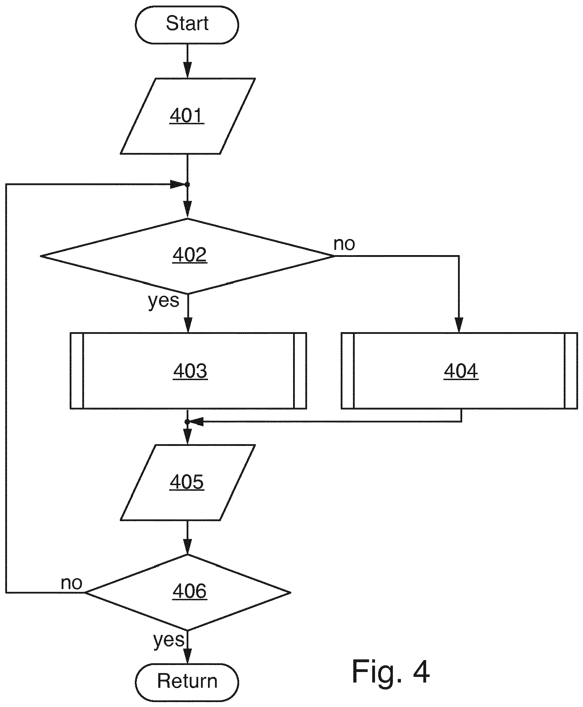

The output data of the industrial automation application 110 is provided by the industrial automation application 110 via the first interface 102. An example for this preparation is explained below referencing figure 4.

Preparing in this context means that the peripheral device specific, industrial automation function determines the automation technology output value from an automation technology input value.

Providing in this context means e.g. storing the output data at predetermined storage location in the control device 105 for access by the functional element 104, in particular by the industrial automation function. An example for this preparation is explained below referencing figure 4.

Afterwards a step 205 is executed.

In step 205, output data is written to the field bus 120. To this end for example the industrial fieldbus controller 121, i.e. the industrial Ethernet Master or the industrial EtherCAT Master, receives data from the second interface 103 and sends the data via the fieldbus 120. In this process the corresponding field bus protocol is used.

In an example of a Computerized Numerical Control a message including as payload corresponding data is sent via the industrial fieldbus 120. Preferably all current output data, in particular all data output of the second interface 103 since the last cycle, is sent.

This means that the second interface 103 sends data according to the corresponding field bus protocol.

This way an output value for the current cycle is send to the industrial fieldbus hardware.

Afterwards the method ends.

Preferably the first interface 102 does not use messages according to the corresponding fieldbus protocol.

Preferably the interface 101 may be configured for additional, peripheral device specific, direct communication between the fieldbus controller 121 and the industrial automation application 110. To this end the interface 101 comprises another interface 106. The other interface 106 is configured to forward any message received from the industrial fieldbus controller 121, preferably unchanged. In this case the industrial automation application 110 is configured to determine the input value from the payload of the message, compute an output value, create a response in payload of a response message and send the response message, preferably via the other interface 106. In this case the messages are according to the corresponding field bus protocol.

To prepare and provide input data or output data requires accessing a respective object. An example is described below referencing figure 3 and figure 4 respectively.

Figure 3 schematically depicts a method for preparing input data. In the example input data for Computerized Numerical Control operation is processed.

After the start a step 301 is executed.

In step 301 a first state variable i is initialized. In the example the first state variable i is set to Zero.

Afterwards a step 302 is executed.

In step 302 a test is performed to determine whether a predetermined condition is met. The predetermined condition is met, in case at least one predetermined instruction of the peripheral device specific automation function is assigned to an object.

In the example, for multiple controlled axes a table of the following format is defined:
BOOL plugInActive[MAX_PLUGINS] [MAX_AXES];
MAX_PLUGINS defines the maximum amount of objects that can be assigned. For example MAX_PLUGINS = 64.

MAX_AXES defines the maximum amount of axes that can be controlled. For example MAX_AXES = 3.

A specific PlugIn is accessible via handles to corresponding objects as follows:
plugInActive[PrepareInputData] [axisIndex].

PrepareInputData is a handle to the object. The peripheral device specific automation function is the PlugIn that is assigned to this object.

If a peripheral device specific PlugIn is available or required, the corresponding value in the table is set to TRUE.

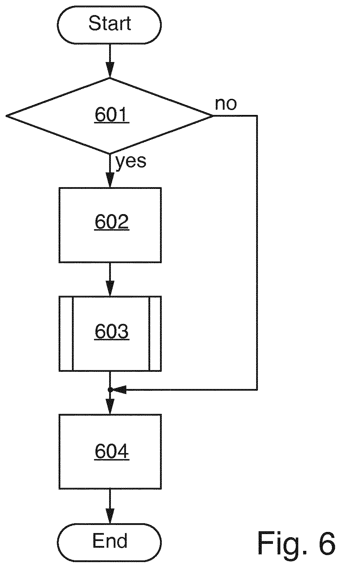

A process for assignment is described below referencing figure 6.

If the predetermined condition is met, a step 303 is executed. Otherwise a step 304 is executed.

In the example the test is implemented as follows:
plugInActive[PrepareInputData] [i]=TRUE.

In step 303 a respective industrial automation function is called and a respective handle for the object is used to call the industrial automation function.

In the example the call is implemented as follows:
call PlugIn(PrepareInputData,i).

The industrial automation function contains at least one instruction to determine the industrial automation output value from the industrial automation input value. This means that the input data for the industrial automation application 110 is prepared.

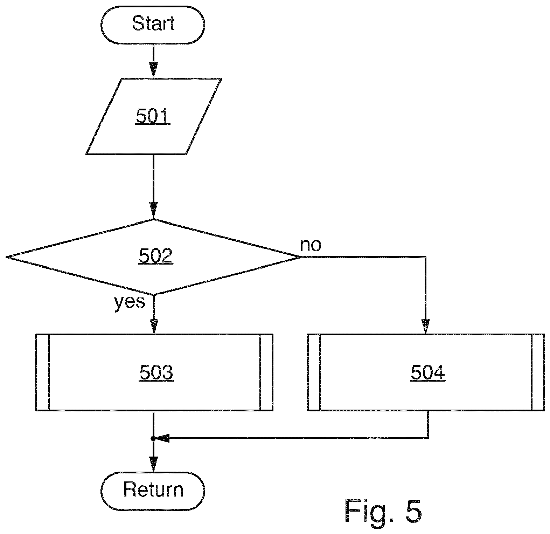

In one example of Computerized Numerical Control, data received from a peripheral device in a first peripheral device specific format is converted into a predetermined data format of the Computerized Numerical Control. In another example a complex calibration function is executed. The latter is explained below referencing figure 5.

The resulting input data for the industrial automation function is sent via the first interface 102.

Afterwards a step 305 is executed.

In step 304 the message is forwarded to the industrial automation application 110 unchanged. This means that the message is sent via the other interface 106.

Afterwards the step 305 is executed.

In step 305 the first state variable i is incremented, e.g. by 1.

Afterwards a step 306 a test is performed to determine if all required input data has been processed. For example in a Computerized Numerical Control input data for all axes that are controlled may be checked. In the test a threshold imax for the first state variable i may be used. In this case the threshold imax is set to the number of controlled axes, e.g. 3.

If all input data has been processed the method returns to step 202 of figure 2. In the example the method returns to step 202 if the value of the state variable i > i max.

Otherwise step 302 is executed. This way the remaining input data is prepared.

Steps 301, 305 and 306 are optional, e.g. not used in case only one axis is controlled.

Figure 4 schematically depicts a method for preparing output data. In the example output data for Computerized Numerical Control operation is processed.

After the start a step 401 is executed.

In step 401 a second state variable j is initialized. In the example the second state variable j is set to Zero.

Afterwards a step 402 is executed.

In step 402 a test is performed to determine whether a predetermined condition is met. The predetermined condition is met, in case at least one predetermined instruction of the peripheral device specific automation function is assigned to an object.

In the example, for multiple controlled axes the aforementioned table is used:
BOOL plugInActive[MAX_PLUGINS] [MAX_AXES];
Accordingly access via handles is available as follows:
plugInActive[PrepareOutputData] [axisIndex]
PrepareOutputData is a handle to the object. The peripheral device specific automation function is the PlugIn that is assigned to this object.

If a peripheral device specific PlugIn is available or required, the corresponding value in the table is set to TRUE.

A process for assignment is described below referencing figure 6.

If the predetermined condition is met, a step 403 is executed. Otherwise a step 404 is executed.

In the example the test is implemented as follows:
plugInActive[PrepareOutputData] [j]=TRUE.

In step 403 a respective industrial automation function is called and a respective handle for the object is passed to the industrial automation function.

In the example the call is implemented as follows:
call PlugIn(PrepareOutputData, j).

The industrial automation function contains at least one instruction to determine the industrial automation output value from the industrial automation input value. This means that the output data of the industrial automation application 110 is prepared for the peripheral device 130.

In one example of Computerized Numerical Control, data received in a predetermined data format of the Computerized Numerical Control is converted into the first peripheral device specific format. In another example a complex calibration function may be executed. The latter is explained below referencing figure 5.

The output data is sent as payload in a message according to the industrial field bus protocol via the second interface 103 for the industrial fieldbus controller 121.

Afterwards a step 405 is executed.

In step 404 the message is forwarded to the industrial fieldbus controller 121 unchanged. This means that the message is sent via the other interface 106.

Afterwards the step 405 is executed.

In step 405 the second state variable j is incremented, e.g. by 1.

Afterwards a step 406 a test is performed to determine if all required output data has been processed. For example in a Computerized Numerical Control output data for all axes that are controlled may be checked. In the test a second threshold jmax for the second state variable j may be used. In this case the threshold jmax is set to the number of controlled axes, e.g. 3.

If all output data has been processed the method returns to step 204 of figure 2. In the example the method returns to step 204 if the value of the state variable j > jmax.

Otherwise step 402 is executed. This way the remaining output data is prepared.

Steps 401, 405 and 406 are optional, e.g. not used in case only one axis is controlled.

Using the object and passing the handle to the object, as described above, allows separation of the industrial application function 110 and the interface 101. Preferably the industrial automation application 110 is stored in first storage. Preferably the control device 105 comprises means to control access to the first storage. Preferably access to the first storage is limited to a predetermined user.

Preferably the functional element 104 of the industrial automation function is stored in second storage. To set up the functional element 104 or to install an industrial automation function, the control device 105 contains a human machine interface or a data port having write access to the second storage. Alternatively, the functional element 104 may be a replaceable hardware.

Preferably the control device 105 or the interface 101 comprises means to control the human machine interface or data port, or the access to the second storage. Preferably the operating system controls access to the second storage. For example the second storage is accessible to any user. This way the industrial automation function is accessible separately from the industrial automation application 110.

According to aforementioned steps 202 and 204, the industrial automation application 110 is configured to execute the predetermined instruction of the peripheral device specific automation function assigned to the object. This way the industrial automation application 110 manages the execution instead of the operating system. This reduces processing time.

Preferably in steps 202 or 204 a predetermined instruction is executed repeatedly. For example the predetermined instruction is called repeatedly, e.g. until a predetermined condition is met, before an automation technology output value is output. This allows more complex functions, e.g. for calibration, to finish before the output is used. An example is explained referencing figure 5. In step 202 or 204 instead of preparing data, a calibration routine may be started. The calibration may be started additionally to preparing data as well.

The method depicted schematically in figure 5 relates to a calibration of a peripheral device 130.

After the start a step 501 is executed.

In step 501 a third state variable k is set to a value identifying the current axis. The value of the current axis is for example passed by the industrial automation application 110 managing the execution of the method.

This step is optional, in case only one axis is available.

Afterwards a step 502 is executed.

In step 502 a test is performed to determine if a predetermined condition is met.

In the example, for multiple controlled axes the aforementioned table is used:
BOOL plugInActive[MAX_PLUGINS][MAX_AXES];
Accordingly access via handles is available as follows:
plugInActive[AXIS_HOMING] [axisIndex].

AXIS_HOMING is a handle to the object. The peripheral device specific automation function is the PlugIn that is assigned to this object.

If a peripheral device specific PlugIn is available or required, the corresponding value in the table is set to TRUE.

A process for assignment is described below referencing figure 6.

If the predetermined condition is met, a step 503 is executed. Otherwise a step 504 is executed.

In the example the test is implemented as follows:
plugInActive[AXIS_HOMING] [k]=TRUE.

In step 503 a respective industrial automation function is called and a respective handle for the object is passed to the industrial automation function.

In the example the call is implemented as follows:
call PlugIn(AXIS_HOMING,k).

After this call the corresponding plugin is processed in parallel to the industrial automation application 110. To this end the industrial automation application 110 or the operating system is configured to process this Plugin in parallel. After the calibration finished, the method may return a result. Preferably in case of successful calibration, a home position is returned. An error may be the return value as well. The returned value may be provided and used in the control device 130 or sent to the peripheral device 130. In the example the Computerized Numerical Control uses the return value as home position or processes the error.

In this example a complex calibration function is executed.

In step 504 the message is forwarded to the industrial fieldbus controller 121 unchanged. This means that the message is sent via the other interface 106. In this case no calibration is executed.

Afterwards the method returns success.

Preferably the industrial automation application 110 is configured to communicate by accessing the object, implemented in the peripheral device specific, industrial automation function, for input or output of the automation technology value. This reduces processing time.

Preferably the industrial automation system comprises an operation system configured to dynamically load the industrial automation function, and to provide the industrial automation application 110 with the handle for the automation function. This is described referencing figure 6.

Preferably in this process the industrial automation function implements the object for data input and/or data output, and a handle for the object is provided to the industrial automation application 110. This allows dynamic loading of any required object.

After the start, in the example after the start of the Computerized Numerical Control device, in an initialization, a step 601 is executed.

In step 601 a test is performed to determine if industrial automation functions are available. In the example a configuration file of the Computerized Numerical Control contains a bit EdiDllConfigured set to TRUE if any industrial automation functions exist and set to FALSE otherwise.

If an industrial automation function is available or if industrial automation functions are available a step 602 is executed. Otherwise a step 604 is executed.

In step 602 any available industrial automation function is loaded. To this end in the example a dynamic link library EdiDll is loaded. The dynamic link library comprises the industrial automation function.

Afterwards a step 603 is executed.

In step 603 an initialization of the industrial automation function is executed. In the example a init call to the dynamic link library EdiDLL is executed. The dynamic link library EdiDLL in the example returns for any peripheral device that can be managed by the dynamic link library:
an identification of a vendor "Vendorldent"
an identification of a peripheral device "ProductIdent".

Furthermore, an identification of a type of the peripheral device "Producttype" such as "drive for axes" or "drive for spindle", "digital component" or "analog component", may be returned.

Furthermore the name of the interface variable, e.g. AxisName, or a number of plugins to be used, e.g. NumberOfPluginsToBeUsed may be returned.

Using this data, the table, e.g. an array, plugInActive[MAX_PLUGINS] [MAX_AXES] is populated. This means a corresponding value is for example set to TRUE if a device specific plugin exists.

This means the industrial automation function returns information about the peripheral device.

Afterwards step 604 is executed.

In step 604 the initialization of the control device 105 is completed and the method ends.

## Claims

1. Interface (101) for communication between an industrial automation application (110) and an industrial fieldbus (120), comprising a first interface (102) to the industrial automation application (110), further comprising a second interface (103) to a fieldbus controller (121), wherein the fieldbus controller (121) is operable to communicate with a peripheral device (130), the interface (101) **characterized by** a functional element (104) between the first interface (102) and the second interface (103), the functional element (104) comprising an implementation of a peripheral device specific, industrial automation function.

2. The interface (101) according to claim 1, wherein the fieldbus controller (121) is implemented as industrial Ethernet Master or EtherCAT Master.

3. The interface (101) according to any of the aforementioned claims, configured for real time processing in a duty cycle between any of 10µs, 50µs, 64.5µs, 125µs and 250µs and any of 4ms, 10ms and 20ms.

4. The interface (101) according to any of the aforementioned claims, wherein the peripheral device specific, industrial automation function comprises at least one predetermined instruction to determine an automation technology output value from an automation technology input value.

5. The interface (101) according to any of the aforementioned claims, wherein the industrial automation application (110) is configured to communicate via the fieldbus (120), preferably cyclically, by
accessing an object implemented in the peripheral device specific industrial automation function, for input or output of an automation technology value, and
executing at least one predetermined instruction of the peripheral device specific automation function assigned to the object.

6. The interface (101) according to claim 4 or 5, wherein the at least one predetermined instruction is called repeatedly until a predetermined condition is met, before an automation technology output value is output.

7. The interface (101) according to any of the aforementioned claims, further comprising a third interface (106), configured for additional peripheral device specific direct communication between the fieldbus controller (121) and the industrial automation application (110).

8. The interface (101) according to any of the aforementioned claims, wherein the industrial automation application (110) is a Computerized Numerical Control application.

9. The interface (101) according to any of the aforementioned claims, configured with a dynamically loadable industrial automation function comprising an object for data input and/or data output accessible by the industrial automation application (110) via a predetermined handle to the object.

10. Computerized Numerical Control (CNC) device **characterized by** the interface (101) according to any of the claims 1 to 9.

11. Method for interfacing an industrial automation application (110) via an interface (101) to an industrial fieldbus (120), wherein a fieldbus controller (121) is adapted for communicating via the industrial fieldbus (120) with a peripheral device (130), **characterized by** processing data at a functional element (104) between a first interface (102) to the industrial automation application (110) and a second interface (103) to the field bus controller (121), wherein, at the functional element (104), input data is received or output data is sent according to an implementation of a peripheral device specific, industrial automation function.

12. The method according to claim 11, wherein the fieldbus controller (121) is implemented as industrial Ethernet Master or EtherCAT Master.

13. The method according to any of the claims 11 or 12, configured for real time processing in a duty cycle between any of 10µs, 50µs, 64.5µs, 125µs and 250µs and any of 4ms, 10ms and 20ms.

14. The method according to any of the claims 11 to 13, wherein the peripheral device specific industrial automation function comprises at least one predetermined instruction to determine an automation technology output value from an automation technology input value.

15. The method according to any of claims 11 to 14, comprising communication via the fieldbus (120), preferably cyclically, by
accessing an object implemented in the peripheral device specific industrial automation function, for input or output of an automation technology value, and
executing at least one predetermined instruction of the peripheral device specific automation function assigned to the object.

16. The method according to claim 14 or 15, comprising calling of the at least one predetermined instruction repeatedly until a predetermined condition is met, before output of an automation technology output value.

17. The method according to any of the claims 11 to 16, further comprising additional peripheral device specific direct communication between the fieldbus controller (121) and the industrial automation application (110).

18. The method according to any of the claims 11 to 17, wherein the industrial automation application is a Computerized Numerical Control (CNC) application.

19. The method according to any of the claims 11 to 18, comprising
dynamically loading the industrial automation function by an operating system, wherein the industrial automation function comprises an object for data input and/or data output,
accessing, by the industrial automation application (110), the object via a predetermined handle to the object.

## Patentansprüche

1. Schnittstelle (101) für eine Kommunikation zwischen einer industriellen Automatisierungsanwendung (110) und einem industriellen Feldbus (120), umfassend eine erste Schnittstelle (102) mit der industriellen Automatisierungsanwendung (110), ferner umfassend eine zweite Schnittstelle (103) mit einer Feldbus-Steuervorrichtung (121), wobei die Feldbus-Steuervorrichtung (121) betriebsfähig ist, mit einem Peripheriegerät (130) zu kommunizieren, wobei die Schnittstelle (101) durch ein funktionales Element (104) zwischen der ersten Schnittstelle (102) und der zweiten Schnittstelle (103) gekennzeichnet ist, wobei das funktionale Element (104) eine Implementierung einer für das Peripheriegerät spezifischen industriellen Automatisierungsfunktion umfasst.

2. Schnittstelle (101) nach Anspruch 1, wobei die Feldbus-Steuervorrichtung (121) als industrielles Ethernet Master oder EtherCAT Master implementiert ist.

3. Schnittstelle (101) nach einem der vorhergehenden Ansprüche, die für Echtzeitverarbeiten in einem Arbeitszyklus zwischen 10 µs, 50 µs, 64,5 µs, 125 µs oder 250 µs und 4 ms, 10 ms oder 20 ms konfiguriert ist.

4. Schnittstelle (101) nach einem der vorhergehenden Ansprüche, wobei die für das Peripheriegerät spezifische industrielle Automatisierungsfunktion wenigstens eine vorgegebene Anweisung umfasst, um einen Automatisierungstechnologieausgabewert von einem Automatisierungstechnologieeingabewert zu bestimmen.

5. Schnittstelle (101) nach einem der vorhergehenden Ansprüche, wobei die industrielle Automatisierungsanwendung (110) konfiguriert ist, um über den Feldbus (120), vorzugsweise zyklisch durch Folgendes zu kommunizieren:
Zugreifen auf ein Objekt, das in der für das Peripheriegerät spezifischen industriellen Automatisierungsfunktion implementiert ist, zum Eingeben oder Ausgeben eines Automatisierungstechnologiewertes, und
Ausführen wenigstens einer vorgegebenen Anweisung der für das Peripheriegerät spezifischen industriellen Automatisierungsfunktion, die dem Objekt zugeordnet ist.

6. Schnittstelle (101) nach Anspruch 4 oder 5, wobei die wenigstens eine vorgegebene Anweisung wiederholt aufgerufen wird, bis eine vorgegebene Bedingung erfüllt wird, bevor ein Automatisierungstechnologieausgabewert ausgegeben wird.

7. Schnittstelle (101) nach einem der vorhergehenden Ansprüche, ferner umfassend eine dritte Schnittstelle (106), die für eine zusätzliche Peripheriegerät spezifische direkte Kommunikation zwischen der Feldbus-Steuervorrichtung (121) und der industriellen Automatisierungsanwendung (110) konfiguriert ist.

8. Schnittstelle (101) nach einem der vorhergehenden Ansprüche, wobei die industrielle Automatisierungsanwendung (110) eine Computer-NC-Steuerungsanwendung ist.

9. Schnittstelle (101) nach einem der vorhergehenden Ansprüche, die mit einer dynamisch ladbaren industriellen Automatisierungsfunktion konfiguriert ist, die ein Objekt für Dateneingabe und/oder Datenausgabe umfasst, das durch die industrielle Automatisierungsanwendung (110) über einen vorgegebenen Handle zu dem Objekt zugänglich ist.

10. Computer-NC-Steuerung(*Computerized Numerical Control -* CNC)-Vorrichtung, **gekennzeichnet durch** die Schnittstelle (101) nach einem der Ansprüche 1 bis 9.

11. Verfahren zum Miteinanderverbinden einer industriellen Automatisierungsanwendung (110) über eine Schnittstelle (101) mit einem industriellen Feldbus (120), wobei eine Feldbus-Steuervorrichtung (121) zum Kommunizieren mit einem Peripheriegerät (130) über den industriellen Feldbus (120) angepasst ist, **gekennzeichnet durch** das Verarbeiten von Daten an einem funktionalen Element (104) zwischen einer ersten Schnittstelle (102) mit der industriellen Automatisierungsanwendung (110) und einer zweiten Schnittstelle (103) mit der Feldbus-Steuervorrichtung (121), wobei Eingabedaten an dem funktionalen Element (104) empfangen werden oder Ausgabedaten gemäß einer Implementierung einer für das Peripheriegerät spezifischen industriellen Automatisierungsfunktion gesendet werden.

12. Verfahren nach Anspruch 11, wobei die Feldbus-Steuervorrichtung (121) als industrielles Ethernet Master oder EtherCAT Master implementiert wird.

13. Verfahren nach einem der Ansprüche 11 oder 12, das für Echtzeitverarbeiten in einem Arbeitszyklus zwischen 10 µs, 50 µs, 64,5 µs, 125 µs oder 250 µs und 4 ms, 10 ms oder 20 ms konfiguriert ist.

14. Verfahren nach einem der Ansprüche 11 bis 13, wobei die für das Peripheriegerät spezifische industrielle Automatisierungsfunktion wenigstens eine vorgegebene Anweisung umfasst, um einen Automatisierungstechnologieausgabewert von einem Automatisierungstechnologieeingabewert zu bestimmen.

15. Verfahren nach einem der Ansprüche 11 bis 14, umfassend die Kommunikation über den Feldbus (120), vorzugsweise zyklisch durch Folgendes:
Zugreifen auf ein Objekt, das in der für das Peripheriegerät spezifischen industriellen Automatisierungsfunktion implementiert ist, zum Eingeben oder Ausgeben eines Automatisierungstechnologiewertes, und
Ausführen wenigstens einer vorgegebenen Anweisung der für das Peripheriegerät spezifischen industriellen Automatisierungsfunktion, die dem Objekt zugeordnet ist.

16. Verfahren nach Anspruch 14 oder 15, umfassend das wiederholte Aufrufen der wenigstens einen vorgegebenen Anweisung, bis eine vorgegebene Bedingung erfüllt wird, bevor ein Automatisierungstechnologieausgabewert ausgegeben wird.

17. Verfahren nach einem der Ansprüche 11 bis 16, ferner umfassend eine zusätzliche Peripheriegerät spezifische direkte Kommunikation zwischen der Feldbus-Steuervorrichtung (121) und der industriellen Automatisierungsanwendung (110).

18. Verfahren nach einem der Ansprüche 11 bis 17, wobei die industrielle Automatisierungsanwendung (110) eine Computer-NC-Steuerung(CNC)-Anwendung ist.

19. Verfahren nach einem der Ansprüche 11 bis 18, Folgendes umfassend:
dynamisches Laden der industriellen Automatisierungsfunktion, wobei die industrielle Automatisierungsfunktion ein Objekt für Dateneingabe und/oder Datenausgabe umfasst
Zugreifen durch die industrielle Automatisierungsanwendung (110) über einen vorgegebenen Handle auf das Objekt.

## Revendications

1. Interface (101) de communication entre une application d'automatisation industrielle (110) et un bus industriel de terrain (120) comprenant une première interface (102) pour l'application d'automatisation industrielle (110), et en outre une seconde interface (103) vers un contrôleur de bus de terrain (121), le contrôleur de bus de terrain (121) communiquant avec un dispositif périphérique (130), l'interface (101) étant **caractérisée par** un élément fonctionnel (104) entre la première interface (102) et la seconde interface (103), l'élément fonctionnel (104) comprenant l'implémentation d'une fonction d'automatisation industrielle spécifique à un dispositif périphérique.

2. Interface (101) selon la revendication 1, dans laquelle le contrôleur de bus de terrain (121) est implémenté comme Master Ethernet ou Master EtherCAT.

3. Interface (101) selon l'une quelconque des revendications précédentes configurée pour un traitement en temps réel selon un cycle de travail compris entre n'importe quel cycle parmi 10µs, 50µs, 64,5µs, 125µs et 250µs et 4ms, 10ms et 20ms.

4. Interface (101) selon l'une quelconque des revendications précédentes dans laquelle la fonction d'automatisation industrielle spécifique à un dispositif périphérique comprend au moins une instruction prédéterminée pour déterminer une valeur de sortie technologique d'automatisation à partir d'une valeur d'entrée technologique d'automatisation.

5. Interface (101) selon une quelconque des revendications précédentes dans laquelle l'application d'automatisation industrielle (110) est configurée pour communiquer par l'intermédiaire du bus de terrain (120) de préférence de manière cyclique, par
l'accession à un objet implémenté dans la fonction d'automatisation industrielle spécifique à un dispositif périphérique pour entrer ou sortir une valeur technologique d'automatisation, et
exécuter au moins une instruction prédéterminée de la fonction d'automatisation spécifique d'un dispositif périphérique assignée à cet objet.

6. Interface (101) selon l'une quelconque des revendications 4 ou 5, dans laquelle au moins une instruction prédéterminée qui est appelée de façon répétée jusqu'à ce qu'une condition prédéterminée soit remplie avant de sortir une valeur de sortie technologique d'automatisation.

7. Interface (101) selon l'une quelconque des revendications précédentes comprenant en outre une troisième interface (106) configurée pour une communication directe, spécifique pour un dispositif périphérique additionnel entre le contrôleur de bus de terrain (121) et l'application d'automatisation industrielle (110).

8. Interface (101) selon l'une quelconque des revendications précédentes selon laquelle l'application automatisation industrielle (110) est une application de commande numérique par ordinateur.

9. Interface (101) selon l'une quelconque des revendications précédentes configurée avec une fonction automatisation industrielle qui peut être chargée de manière dynamique comprenant un objet pour une entrée de données et/ou une sortie accessible à une application d'automatisation industrielle (110) par un traitement prédéterminé avec l'objet.

10. Dispositif de commande numérique par ordinateur (CNC) **caractérisé par** une interface (101) selon l'une quelconque des revendications 1 à 9.

11. Procédé d'interfaçage d'une application d'automatisation industrielle (110) par une interface (101) vers un bus de terrain industriel (120), selon lequel, le contrôleur de bus de terrain (121) est adapté pour communiquer par le bus de terrain industriel (120) avec un dispositif périphérique (130) **caractérisé par** un traitement de données dans un élément fonctionnel (104) entre une première interface (102) et l'application d'automatisation industrielle (110) et une seconde interface (103) vers le contrôleur de bus de terrain (121), dans lequel dans l'élément fonctionnel (104), reçoit la donnée d'entrée ou envoie la donnée sortie selon l'implémentation d'une fonction d'automatisation industrielle spécifique à un dispositif périphérique.

12. Procédé selon la revendication 11, selon lequel le contrôleur de bus de terrain (121) est implémenté comme Master Ethernet ou comme Master EtherCAT.

13. Procédé selon l'une quelconque des revendications 11 ou 12, configuré pour un traitement en temps réel selon un cycle de travail compris entre n'importe quel cycle 10µs, 50µs, 64,5µs, 125µs et 250µs et 4ms, 10ms et 20ms.

14. Procédé selon l'une quelconque des revendications 11 á 13, selon lequel la fonction d'automatisation industrielle spécifique à un dispositif périphérique comporte au moins une instruction prédéterminée pour déterminer une valeur de sortie technologique d'automatisation à partir d'une valeur d'entrée de technologie d'automatisation.

15. Procédé selon l'une quelconque des revendications 11 à 14, comprenant la communication par le bus de terrain (120) de préférence de manière cyclique en
accédant à un objet implémenté dans la fonction d'automatisation industrielle spécifique à un dispositif périphérique pour entrer ou sortir une valeur technologique d'automatisation, et
exécutant au moins une instruction prédéterminée de la fonction d'automatisation spécifique du dispositif périphérique attribuée.

16. Procédé selon l'une quelconque des revendications 14 ou 15, comprenant l'appel d'au moins une instruction prédéterminée de façon répétée jusqu'à ce qu'une condition prédéterminée soit remplie avant de sortir une valeur de sortie technologique d'automatisation.

17. Procédé selon l'une quelconque des revendications 11 à 16, en outre comprenant la communication directe spécifique à un dispositif périphérique additionnel entre le contrôleur de bus de terrain (121) et l'application d'automatisation industrielle (110).

18. Procédé selon l'une quelconque des revendications 11 à 17, selon lequel l'application d'automatisation industrielle est une application de commande numérique par ordinateur (CNC).

19. Procédé selon l'une quelconque des revendications 11 à 18, consistant à:
charger dynamiquement la fonction d'automatisation industrielle d'un système d'opérateur, la fonction d'automatisation industrielle comprenant un objet pour une entrée de données et/ou une sortie de données, et
accéder, par l'application d'automatisation industrielle (110), à l'objet par un traitement prédéterminé pour l'objet.
